# FASCICULE DE BREVET EUROPEEN

(11) **EP 1 500 577 B1**
(45) Date de publication et mention de la délivrance du brevet: **16.01.2013**
(21) Numéro de dépôt: 04291863.1
(22) Date de dépôt: 22.07.2004
(51) Int. Cl.: B62D 25/08

(54) **Ensemble de pièces pour véhicule automobile**
Satz von Teilen für Kraftfahrzeug
Set of parts for vehicle

(30) Priorité: 23.07.2003 FR 0308994
(43) Date de publication de la demande: 26.01.2005
(73) Titulaire: COMPAGNIE PLASTIC OMNIUM, 69007 Lyon (FR)
(72) Inventeur: Bourennane, Faicel, 01500 Amberieu en Bugey (FR)
(74) Mandataire: de la Bigne, Guillaume Michel Marie

(56) Documents cités:
- EP-A- 0 908 373
- DE-A- 3 035 352
- US-A- 3 730 582

## Description

La présente invention concerne un ensemble de pièces pour véhicule automobile.

On connaît déjà des pièces de carrosserie de véhicule automobile, telles que des boucliers avant, sur lesquelles sont fixés des organes extérieurs, tels que des grilles de calandre.

On sait qu'il est avantageux de fixer de tels organes extérieurs de façon non définitive sur la pièce de carrosserie afin de limiter les coûts de réparation d'une part, et de permettre un accès à d'autres organes extérieurs tels que des optiques de véhicule automobile d'autre part.

En particulier, dans le cas des boucliers avant comportant une face avant technique encombrante, les optiques sont difficilement accessibles depuis le côté intérieur du véhicule lorsque le capot est ouvert et il est possible, lorsque la grille de calandre n'est pas en position d'utilisation, de les atteindre depuis l'extérieur du bouclier.

Le problème consiste en ce que, dans un tel bouclier où les optiques sont accessibles depuis l'extérieur du bouclier lorsque la grille de calandre est ôtée, l'accès n'est pas réservé au propriétaire du véhicule uniquement mais à tout individu qui enlève la grille de calandre de bouclier.

Par conséquent, un tel bouclier est peu avantageux pour le propriétaire du véhicule qui risque de se faire facilement voler ou endommager sa grille de calandre ainsi que ses optiques.

Par ailleurs, il est difficile de verrouiller cette grille de calandre depuis l'intérieur du bouclier à cause de la face avant technique encombrante, et un verrouillage depuis l'extérieur à l'aide d'une clé spécifique que posséderait le propriétaire serait contraignant.

Du document US 3 730 582, on connaît un véhicule muni d'une grille assimilable à une grille de calandre, qui est fixée par des boulons à des pièces de carrosserie latérales délimitant, à l'avant du véhicule, un compartiment à bagages fermé par un capot.

Le démontage de la grille n'est possible que moyennant l'ouverture du capot afin d'accéder aux boulons.

Le document EP 0 908 373 A1 montre un ensemble de pièces de véhicule automobile conforme au préambule de la revendication 1.

Cet état de la technique ne résout pas le problème sus-mentionné du verrouillage de la grille de calandre, d'une part parce qu'il est complexe à mettre en oeuvre, notamment concernant le montage et la fixation de la grille, qui ne sont plus compatibles avec les contraintes de rendement industriel actuelles, d'autre part parce que, le capot étant fermé, rien ne garantit que la grille est effectivement bien verrouillée sur les pièces de carrosserie.

L'invention vise à remédier à ces inconvénients en fournissant un verrouillage automatique de la grille de calandre lorsque le capot est verrouillé.

A cet effet, l'invention a pour objet un ensemble de pièces de véhicule automobile conforme à la revendication 1.

Cet ensemble est caractérisé en ce que l'élément mobile est agencé de manière que ledit élément mobile ne peut prendre sa position de déverrouillage qu'en position ouverte de l'ouvrant.

Ainsi, l'ensemble selon l'invention ne propose un accès au déverrouillage de la grille de calandre que lorsque le capot est ouvert. Par conséquent, lorsque le capot est fermé, la grille de calandre est automatiquement en position de verrouillage et ne peut être dérobée.

Un ensemble de pièces de véhicule automobile selon l'invention peut en outre comporter l'une ou plusieurs des caractéristiques suivantes :
- la pièce de carrosserie est un bouclier de véhicule automobile ;
- la pièce de carrosserie comporte une portion destinée à être recouverte par un capot de véhicule automobile ;
- l'organe extérieur est une grille de calandre ;
- la tige est en matière plastique ;
- les moyens de retenue comprennent un oeillet agencé sur l'organe extérieur ;
- les moyens de retenue comprennent une lumière agencée sur la pièce de carrosserie en regard de l'ouvrant;
- l'élément mobile est destiné à pénétrer dans les moyens de retenue ;
- l'élément mobile passe de sa position de verrouillage à sa position de déverrouillage selon un mouvement sensiblement vertical ;
- la tige comporte un dispositif anti-enlèvement ;
- la position de verrouillage de l'élément mobile correspond à une position d'utilisation de l'organe extérieur ; et
- l'organe extérieur comporte des moyens de fixation sur la pièce de carrosserie.

L'invention a également pour objet un ensemble de pièces de véhicule automobile de type précité, comprenant l'ouvrant apte à recouvrir la portion de la pièce de carrosserie en position fermée.

L'invention sera mieux comprise à la lecture de la description qui va suivre, donnée uniquement à titre d'exemple et faite en se référant aux dessins annexés dans lesquels :
- la figure 1 représente un véhicule automobile comportant un ensemble de pièces selon l'invention ;
- la figure 2 représente une vue en perspective d'une grille de calandre selon l'invention, et ;
- la figure 3 représente une vue de profil du bouclier avant du véhicule automobile de la figure 1 comportant la grille de calandre en position de verrouillage selon l'invention.

Dans la description, les orientations qui sont fournies concernant la grille de calandre et les autres pièces du véhicule sont données lorsque la grille est montée sur le véhicule en position d'utilisation.

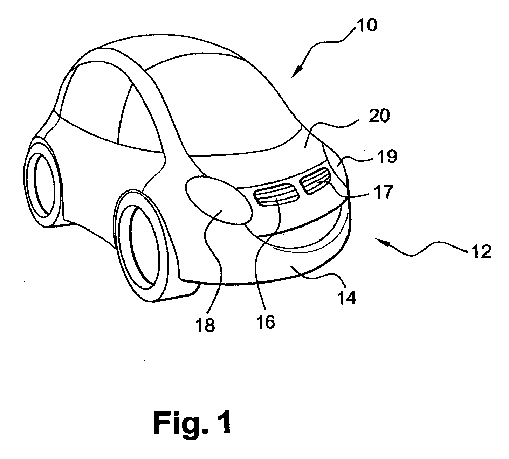

On peut voir sur la figure 1 un véhicule automobile 10 comportant un bloc avant 12. Ce bloc avant 12 est muni d'un pare-chocs 14, de deux grilles de calandre 16, 17 et de deux optiques 18, 19. Le véhicule automobile 10 comporte également un capot avant 20.

Les grilles de calandre 16, 17 sont démontables et permettent d'accéder à l'intérieur des optiques 18, 19.

Selon un autre mode de réalisation, les grilles de calandre 16 et 17 peuvent être d'un seul tenant et ne former ainsi qu'un unique organe extérieur comportant éventuellement un barreau vertical central destiné à soutenir la partie supérieure du bouclier.

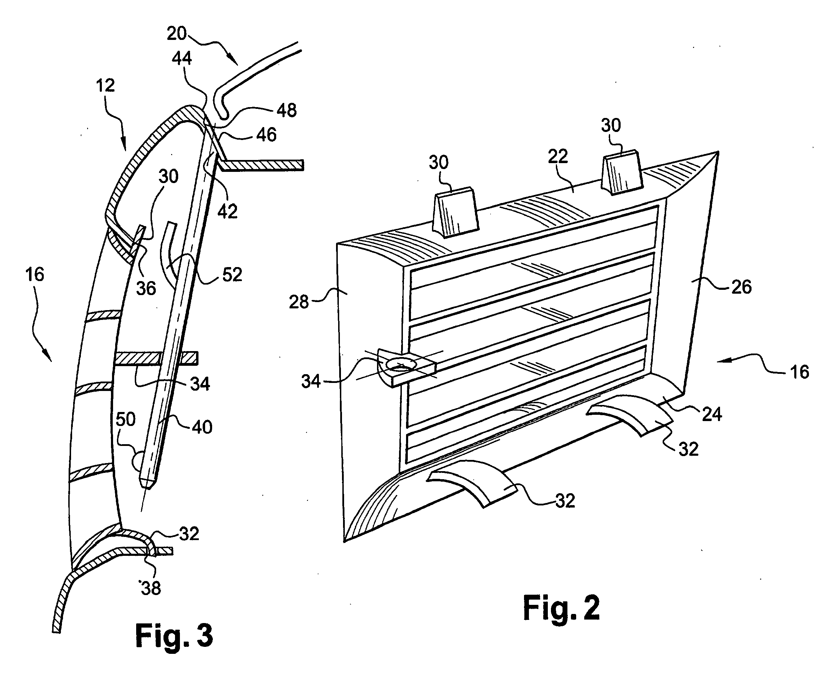

On peut voir sur la figure 2 la grille de calandre 16 démontée hors du bouclier 12. Cette grille de calandre 16 comporte un cadre comprenant une paroi supérieure 22 et une paroi inférieure 24, les deux parois 22 et 24 étant orientées principalement vers l'intérieur du véhicule et étant destinées à venir en contact avec le bouclier avant 12.

Le cadre comporte également deux parois latérales verticales 26 et 28, également orientées principalement vers l'intérieur du véhicule. La paroi latérale 26 est destinée à venir en contact avec le côté du bouclier 12 comportant l'optique 18 et la paroi latérale 28 est destinée à venir en contact avec la partie centrale du bouclier ou bien, selon un autre monde de réalisation, directement avec l'autre grille de calandre 17.

Compte tenu de leur orientation, les parois 22, 24, 26 et 28 s'appliquent contre leurs appuis respectifs par déplacement de la grille en direction de l'intérieur du véhicule.

La grille de calandre 16 comporte des moyens de fixation au bouclier avant 12. Ces moyens de fixation sont constitués par des nervures de pivot 30, agencées sur la paroi supérieure 22 de la grille, et des nervures de clippage 32 agencées sur la paroi inférieure 24 de la grille.

Ces nervures 30 et 32 ont pour but de s'opposer au déplacement de la grille en direction de l'extérieur du véhicule, une fois la grille appliquée contre le bouclier par ses parois 22, 24, 26 et 28. Elles assurent ainsi le maintien de la grille en position d'utilisation.

Plus précisément, la grille se met en place, comme on le voit sur la figure 3, par engagement de ses nervures de pivot 30 sous une surface intérieure 36 du bouclier 12, puis de ses nervures de clippage 32 dans des orifices 38 agencés dans une paroi intérieure du bouclier 12.

Mais on comprend que la grille, ainsi encliquetée, n'est pas verrouillée en position d'utilisation et pourrait être démontée en exerçant sur elle une simple traction depuis l'extérieur du véhicule.

La grille de calandre 16 comporte également, en saillie de sa paroi latérale 28, un oeillet de verrouillage 34, dirigé vers l'intérieur du véhicule.

La grille de calandre 16, lorsqu'elle est fixée, en position d'utilisation, au bouclier par les moyens de fixation 30 et 32, est verrouillée sur le bouclier 12 grâce à une tige mobile 40 en matière plastique. Cette tige mobile 40 passe à travers l'oeillet de verrouillage 34 agencé sur la grille ainsi qu'à travers un orifice 42 agencé sur une paroi interne 44 du bouclier 12, selon une position de verrouillage. Cette paroi interne 44 correspond à une paroi en regard du capot 20 lorsque celui-ci est fermé.

En positon de verrouillage, la tête 46 de la tige mobile 40 est immobile dans l'orifice 42 et ne dépasse pas de la paroi 44 du bouclier 12.

En effet, la tête 46 de la tige 40 à un diamètre supérieur à celui de la tige 40, et l'orifice 42 comporte, sur la partie supérieure de la paroi interne 44 un orifice 48 de diamètre sensiblement égal à celui de cette tête 46, tandis que la partie inférieure de l'orifice 42 a sensiblement le même diamètre que celui de la tige 40.

On peut voir que lorsque le capot 20 est fermé, l'accès à la tête 46 de la tige 40, située en regard du capot, est impossible. Il est donc impossible, pour une personne n'ayant pas la possibilité d'ouvrir le capot, de placer la tige 40 en position de déverrouillage pour déverrouiller l'accès à la grille de calandre 16.

Lorsque l'on souhaite déverrouiller la grille de calandre 16, on ouvre tout d'abord le capot 20. Puis on fait sortir la tête 46 de l'orifice 42, par exemple en poussant avec les doigts, à travers la grille 16, sur l'extrémité inférieure de la tige 40 ; on saisit ensuite la tête 46 et on tire la tige mobile 40 vers le haut. Cette tige mobile 40 se déplace selon un mouvement vertical de façon à sortir de l'oeillet de verrouillage 34.

Une fois que la tige 40 est sortie de l'oeillet de verrouillage 34, la grille de calandre 16 n'est fixée au bouclier 20 que par les moyens de fixation 30 et 32 et peut donc être retirée du bouclier 20.

La tige mobile 40 comporte une butée 50 de position haute. Cette butée 50 est destinée à indiquer à un opérateur qui agit, souvent en aveugle, sur la tige mobile 40, qu'elle est en position de déverrouillage et à l'empêcher de reprendre sa position de verrouillage sans intervention de l'opérateur. En effet, lorsque l'opérateur désire déverrouiller la grille de calandre 16, et qu'il tire la tige mobile 40 suivant un mouvement vertical, l'oeillet de verrouillage 34 est franchi en force par la butée 50. Ce franchissement en force avertit l'opérateur que la tige 40 est en position de déverrouillage.

La tige mobile 40 comporte également un harpon anti-enlèvement 52 destiné à empêcher la tige mobile 40 de sortir de l'orifice 42. Ainsi, lorsque l'on souhaite déverrouiller la grille de calandre 16, la tige mobile 40 reste sur le bouclier avant 12 et les risques de perte de la tige sont évités.

Un avantage de l'invention est qu'elle fournit, grâce à la tige mobile 40, une grille de calandre mobile 16 qui est verrouillée lorsque le capot 20 est fermé.

Parmi les avantages de l'invention, on notera également que la présence de l'oeillet de verrouillage 34 sur la paroi latérale 28 nécessite un renforcement de la matière sur la paroi 28. Ce renforcement de matière permet alors de rendre la paroi latérale 28 plus solide et ainsi de soutenir la partie supérieure horizontale du bouclier avant 12, dite barreau du bouclier, lorsque la grille est en position d'utilisation. Ce soutien du barreau du bouclier est avantageux puisqu'il est fréquent que celui-ci s'affaisse, notamment lorsqu'il n'est pas encore monté sur le véhicule et qu'il ne comporte pas les moyens de soutien qu'il a généralement en position d'utilisation sur le véhicule.

Cet élargissement de la paroi latérale 28 est d'autant plus utile qu'il permet de dissimuler le système de verrouillage décrit ci-dessus depuis l'extérieur.

## Revendications

1. Ensemble de pièces de véhicule automobile (10) comprenant :
- une pièce de carrosserie (12) comportant une portion (44) destinée à être recouverte par un ouvrant (20) en position fermée, pouvant aussi prendre une position ouverte,
- un organe extérieur (16, 17) porté par cette pièce de carrosserie (12), et
- des moyens de verrouillage (34, 40, 42) comportant un élément (40) mobile entre une position de verrouillage et une position de déverrouillage, et des moyens de retenue (34, 42) qui coopèrent avec l'élément mobile (40) pour retenir l'organe extérieur (16, 17) lorsque l'élément mobile (40) est en position de verrouillage et pour libérer l'organe extérieur (16, 17) lorsque l'élément mobile (40) est en position de déverrouillage, les moyens de retenue (34, 42) étant agencés de telle sorte que, en position fermée de l'ouvrant (20), l'élément mobile (40) est maintenu en position de verrouillage, ledit , élement mobile (40) est agencé de manière que ledit élément mobile (40) ne peut prendre sa position de déverrouillage qu'en position ouverte de l'ouvrant (20) et est apte à prendre sa position de verrouillage en position ouverte de l'ouvrant (20), et **caractérisé en ce que** l'élément mobile (40) est une tige comportant une butée (50) de positionnement en position de déverrouillage.

2. Ensemble de pièces de véhicule automobile selon la revendication 1, dans lequel la pièce de carrosserie (12) est un bouclier de véhicule automobile.

3. Ensemble de pièces de véhicule automobile selon la revendication 1 ou 2, dans lequel la pièce de carrosserie (12) comporte une portion (44) destinée à être recouverte par un capot (20) de véhicule automobile.

4. Ensemble de pièces de véhicule automobile selon l'une quelconque des revendications 1 à 3, dans lequel l'organe extérieur (16, 17) est une grille de calandre.

5. Ensemble de pièces de véhicule automobile selon l'une quelconque des revendications 1 à 4, dans lequel la tige (40) est en matière plastique.

6. Ensemble de pièces de véhicule automobile selon l'une quelconque des revendications 1 à 5, dans lequel les moyens de retenue (34, 42) comprennent un oeillet (34) agencé sur l'organe extérieur (16, 17).

7. Ensemble de pièces de véhicule automobile selon l'une quelconque des revendications 1 à 6, dans lequel les moyens de retenue (34, 42) comprennent une lumière (42) agencée sur la pièce de carrosserie (12) en regard de l'ouvrant.

8. Ensemble de pièces de véhicule automobile selon l'une quelconque des revendications 1 à 7, dans lequel l'élément mobile (40) est destiné à pénétrer dans les moyens de retenue (34, 42).

9. Ensemble de pièces de véhicule automobile selon l'une quelconque des revendications 1 à 8, dans lequel l'élément mobile (40) passe de sa position de verrouillage à sa position de déverrouillage selon un mouvement sensiblement vertical.

10. Ensemble de pièces de véhicule automobile selon l'une des revendications 1 à 5, dans lequel la tige (40) comporte un dispositif (52) anti-enlèvement.

11. Ensemble de pièces de véhicule automobile selon l'une quelconque des revendications 1 à 10, dans lequel la position de verrouillage de l'élément mobile (40) correspond à une position d'utilisation de l'organe extérieur (16, 17).

12. Ensemble de pièces de véhicule automobile selon l'une quelconque des revendications 1 à 11, dans lequel l'organe extérieur (16, 17) comporte des moyens de fixation (30, 32) sur la pièce de carrosserie (12).

13. Ensemble de pièces de véhicule automobile selon l'une quelconque des revendications 1 à 12, comprenant l'ouvrant (20) apte à recouvrir la portion (44) de la pièce de carrosserie (12) en position fermée.

## Claims

1. Assembly of motor vehicle parts (10) comprising:
• a bodywork part (12) having a portion (44) that is to be covered by a closure member (20) when in closed position, which closure member is capable also of taking an open position;
• an external member (16, 17) carried by said bodywork part (12); and
• locking means (34, 40, 42) comprising a movable element (40) movable between a locking position and an unlocking position, and retaining means (34, 42) that cooperate with the movable element (40) to retain the external member (16, 17) when the movable element (40) is in the locking position and to release the external member (16, 17) when the movable element (40) is in the unlocking position, the retaining means (34, 42) being arranged in such a manner that, in the closed position of the closure member (20), the movable element (40) is held in the locking position, and said movable element (40) is arranged in such a manner that said movable element (40) can occupy its unlocking position only when the closure member (20) is in the open position and is suitable for occupying its locking position in the open position of the closure member (20); said set of parts being **characterized in that** the movable element (40) is a rod including a stop (50) for positioning it in the unlocking position.

2. Assembly of motor vehicle parts according to claim 1, wherein the bodywork part (12) is a motor vehicle front shield.

3. Assembly of motor vehicle parts according to claim 1 or claim 2, wherein the bodywork part (12) includes a portion (44) that is to be covered by a motor vehicle hood (20).

4. Assembly of motor vehicle parts according to any of claims 1 to 3, wherein the external member (16, 17) is a front grid.

5. Assembly of motor vehicle parts according to any of claims 1 to 4, wherein the rod (40) is made of plastics material.

6. Assembly of motor vehicle parts according to any of claims 1 to 5, wherein the retaining means (34, 42) comprise an eyelet (34) arranged on the external member (16, 17) .

7. Assembly of motor vehicle parts according to any of claims 1 to 6, wherein the retaining means (34, 42) comprise a slot (42) arranged in the bodywork part (12) in register with the closure member.

8. Assembly of motor vehicle parts according to any of claims 1 to 7, wherein the movable element (40) is designed to penetrate into the retaining means (34, 42).

9. Assembly of motor vehicle parts according to any of claims 1 to 8, wherein the movable element (40) passes from its locking position to its unlocking position by moving substantially vertically.

10. Assembly of motor vehicle parts according to any of claims 1 to 5, wherein the rod (40) includes an anti-removal device (52).

11. Assembly of motor vehicle parts according to any of claims 1 to 10, wherein the locking position of the movable element (40) corresponds to a utilization position of the external member (16, 17).

12. Assembly of motor vehicle parts according to any of claims 1 to 11, wherein the external member (16, 17) includes fastener means (30, 32) for fastening it to the bodywork part (12).

13. Assembly of motor vehicle parts according to any of claims 1 to 12, including the closure member (20) suitable for covering the portion (44) of the bodywork part (12) in the closed position.

## Patentansprüche

1. Anordnung von Teilen für Kraftfahrzeug (10), aufweisend:
- ein Karosserieteil (12), das einen Abschnitt (44) aufweist, der dazu bestimmt ist, von einer Tür (20) in geschlossener Position, die auch eine offene Position einnehmen kann, abgedeckt zu werden,
- ein externes Organ (16, 17), das von diesem Karosserieteil (12) getragen wird, und
- Verriegelungsmittel (34, 40, 42), die ein Element (40) aufweisen, das zwischen einer Verriegelungsposition und einer Entriegelungsposition beweglich ist, und Rückhaltemittel (34, 42), die mit dem beweglichen Element (40) zusammenwirken, um das externe Organ (16, 17) zurückzuhalten, wenn sich das bewegliche Element (40) in Verriegelungsposition befindet, und um das externe Organ (16, 17) freizugeben, wenn sich das bewegliche Element (40) in Entriegelungsposition befindet, wobei die Rückhaltemittel (34, 42) derart eingerichtet sind, dass das bewegliche Element (40) bei geschlossener Position der Tür (20) in Verriegelungsposition gehalten wird, wobei das bewegliche Element (40) derart eingerichtet ist, dass das bewegliche Element (40) seine Entriegelungsposition nur in offener Position der Tür (20) einnehmen kann und geeignet ist, um seine Verriegelungsposition bei offener Position der Tür (20) einzunehmen, und **dadurch gekennzeichnet, dass** das bewegliche Element (40) ein Schaft ist, der einen Anschlag (50) zum Positionieren in Entriegelungsposition aufweist.

2. Anordnung von Teilen für Kraftfahrzeug nach Anspruch 1, bei dem das Karosserieteil (12) ein Kraftfahrzeugschild ist.

3. Anordnung von Teilen für Kraftfahrzeug nach Anspruch 1 oder 2, bei dem der Karosserieteil (12) einen Abschnitt (44) aufweist, der dazu bestimmt ist, von einer Kraftfahrzeughaube (20) abgedeckt zu werden.

4. Anordnung von Teilen für Kraftfahrzeug nach einem der Ansprüche 1 bis 3, bei dem das externe Organ (16, 17) ein Kühlergitter ist.

5. Anordnung von Teilen für Kraftfahrzeug nach einem der Ansprüche 1 bis 4, bei dem der Schaft (40) aus Kunststoff besteht.

6. Anordnung von Teilen für Kraftfahrzeug nach einem der Ansprüche 1 bis 5, bei dem die Rückhaltemittel (34, 42) eine Öse (34), die an dem externen Organ (16, 17) eingerichtet ist, aufweisen.

7. Anordnung von Teilen für Kraftfahrzeug nach einem der Ansprüche 1 bis 6, bei dem die Rückhaltemittel (34, 42) ein Langloch (42), das an dem Karosserieteil (12) gegenüber der Tür eingerichtet ist, aufweisen.

8. Anordnung von Teilen für Kraftfahrzeug nach einem der Ansprüche 1 bis 7, bei dem das bewegliche Element (40) dazu bestimmt ist, in die Rückhaltemittel (34, 42) einzudringen.

9. Anordnung von Teilen für Kraftfahrzeug nach einem der Ansprüche 1 bis 8, bei dem das bewegliche Element (40) von seiner Verriegelungsposition zu seiner Entriegelungsposition entlang einer im Wesentlichen vertikalen Bewegung übergeht.

10. Anordnung von Teilen für Kraftfahrzeug nach einem der Ansprüche 1 bis 5, bei dem der Schaft (40) eine Abnehmeschutzvorrichtung (52) aufweist.

11. Anordnung von Teilen für Kraftfahrzeug nach einem der Ansprüche 1 bis 10, bei dem die Verriegelungsposition des beweglichen Elements (40) einer Nutzungsposition des externen Organs (16, 17) entspricht.

12. Anordnung von Teilen für Kraftfahrzeug nach einem der Ansprüche 1 bis 11, bei dem das externe Organ (16, 17) Mittel (30, 32) zum Befestigen an dem Karosserieteil (12) aufweist.

13. Anordnung von Teilen für Kraftfahrzeug nach einem der Ansprüche 1 bis 12, die die Tür (20), die geeignet ist, um den Abschnitt (44) des Karosserieteils (12) in geschlossener Position abzudecken, enthält.
